# EUROPEAN PATENT SPECIFICATION

(11) **EP 2 626 994 B1**
(45) Date of publication and mention of the grant of the patent: **03.04.2019**
(21) Application number: 12154540.4
(22) Date of filing: 08.02.2012
(51) Int. Cl.: H02M 7/48

(54) **Supplying electrical power to subsea equipment**
Bereitstellung von elektrischem Strom an eine Unterwasserausrüstung
Fourniture d'une alimentation électrique pour équipement sous-marin

(43) Date of publication of application: 14.08.2013
(73) Proprietor: GE Oil & Gas UK Limited, Nailsea Bristol BS48 1BS (GB)
(72) Inventor: Packham, Andrew, Nailsea, Bristol BS48 1BS (GB); Morley, Graham, Nailsea, Bristol BS48 1BS (GB)
(74) Representative: Stratagem IPM Limited

(56) References cited:
- WO-A1-2009/135730
- WO-A1-2011/147423
- WO-A2-2005/111484

## Description

### Field of the Invention

This invention relates to supplying electrical power to subsea equipment.

### Background of the Invention

For offshore oil and gas wells, electrical power is generated topside, at the surface or onshore, and transmitted subsurface to equipment installed on the seabed via an umbilical.

Communication signals between a master control station, situated topside, and subsea equipment are also transmitted via the same umbilical as electrical power. These signals may be transmitted on separate cables, or may be superimposed on the electrical power transmission by communication-on-power (COP). However, in present day systems, the electrical power may be subjected to mains voltage fluctuations, over-voltages, voltage spikes such as those resulting from switching surges, or harmonics of the mains AC (alternating current) frequency. These effects may cause damage to subsea equipment or may cause interference with the communication signals, whether COP is used or, to a lesser extent, if separate communication cables are used in the umbilical. Interference may cause corruption of control signals or to data from instrumentation and may result in spurious actions. A means of reducing or eliminating these electrical effects would result in a more reliable production control system.

Document WO 2011 147423 shows an apparatus for providing electrical power to subsea equipment in a subsea well facility said appartus comprising, at a topside location means for providing a direct electrical current. The apparatus comprises, at subsea location, means for converting said direct electrical current to an alternating electrical current, means for supplying said alternating electrical current to the subsea equipment,said supply means comprising an umbilical and communication means coupled with said supply means for superimposing data on the voltage of said alternating current.

### Summary of the Invention

According to the invention from one aspect, there is provided apparatus for providing electrical power to subsea equipment in a subsea well facility, the apparatus comprising, at a topside location:
first means, for providing a direct electrical current;
second means, for converting said direct electrical current to an alternating electrical current; and
third means, for supplying said alternating electrical current to the subsea equipment,
said supply means comprising an umbilical, the apparatus further includes, at a topside location, communication means coupled with said supply means for superimposing data on the voltage of said alternating current.

Said first means could comprise a source of alternating electrical current and alternating current to direct current conversion means for converting that alternating current to said direct electrical current. In this case, the apparatus could include a step-up transformer connected between said source and said conversion means for increasing the voltage of the alternating current from said source received by the conversion means.

Alternatively, said first means could comprise a topside direct current supply.

Said communication means could be adapted for extracting data from the subsea equipment received via said supply means.

According to the invention from another aspect, there is provided a method of providing electrical power to subsea equipment in a subsea well facility, the method comprising, at a topside location:
providing a direct electrical current;
converting said direct electrical current to an alternating electrical current; and supplying said alternating electrical current to the subsea equipment, said alternating electrical current being supplied to the subsea equipment via an umbilical,
the method further comprises, at the topside location, superimposing data on to the voltage of the alternating current supplied to the subsea equipment.

Said direct electrical current could be provided by converting an alternating electrical current to a direct electrical current. In this case, the method could comprise using a step-up transformer to increase the voltage of the alternating current which is converted to a direct electrical current.

Alternatively, said direct electrical current could be from a topside direct current supply.

The method could include, at the topside location, extracting data received from the subsea equipment.

### Brief Description of the Drawings

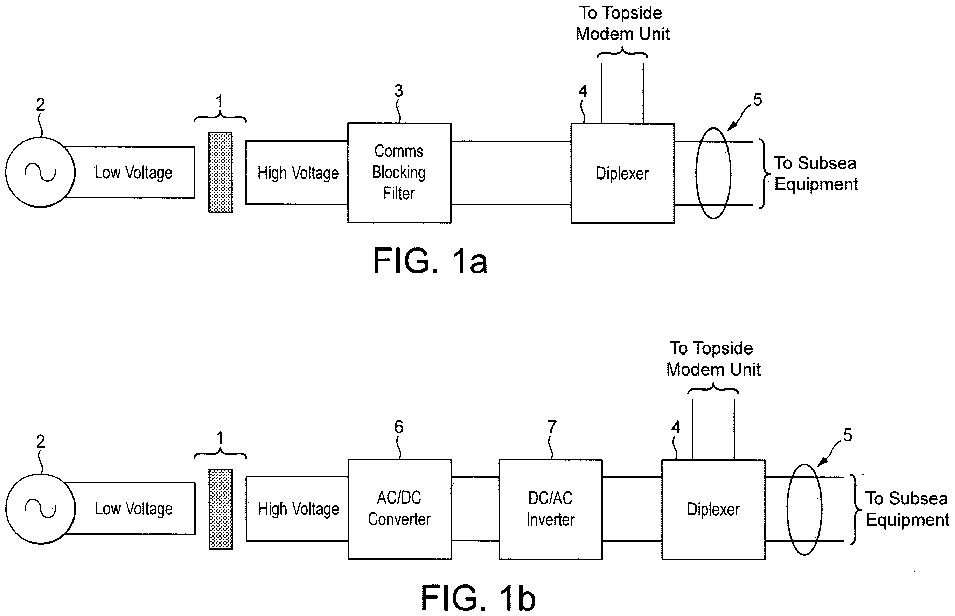

Fig. 1a is a schematic diagram of conventional power supply apparatus for providing electrical power to subsea equipment in a subsea well facility, such as a subsea hydrocarbon well facility;
Fig. 1b is a schematic diagram of a first embodiment of such apparatus according to the invention; and

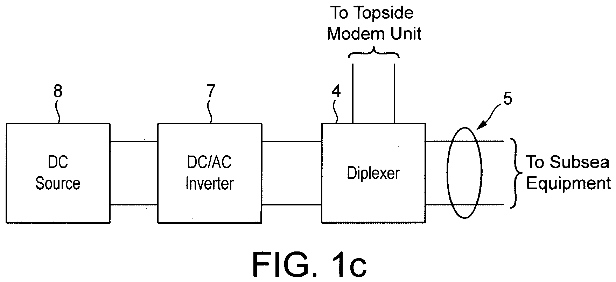

Fig. 1c is a schematic diagram of a second embodiment of such apparatus according to the invention.

### Detailed Description of the Invention

Referring to Fig. 1a, at a topside location, reference numeral 1 designates a step-up transformer for supplying alternating electrical current from an AC mains supply 2. If communication-on-power (COP) is used, the output of transformer 1 is passed through a communications blocking filter 3 to a diplexer 4 which receives data in the form of communication and control signals from a master control station via a topside modem unit, for superimposing such signals on to the voltage of the alternating current from filter 3. The alternating current, with communication signals superimposed on its voltage if COP is used, is then supplied to subsea equipment via an umbilical 5. The transformer 1 is used to convert the input alternating current from a relatively low voltage and high current to a much higher voltage and lower current output alternating current for supplying subsea equipment via the umbilical 5. Because of the lower current, this reduces the transmission losses in the umbilical, which may be several kilometres long. However, this can result in disturbances on the power being transferred to subsea equipment, such as communication equipment.

Also, where COP is used, returning instrumentation data from the subsea equipment is extracted by the diplexer 4 and sent to the topside modem unit and then to the master control station.

Where COP is used, the filter 3 is necessary between the diplexer 4 and the transformer 1, to prevent unwanted communication signals being transmitted through to the mains supply. As stated, the function of the diplexer 4 is to superimpose data in the form of communication and control signals from the topside modem unit on to the electrical power being transferred to the subsea equipment and to extract returning instrumentation data and send it to the surface modem unit and then to the master control station. In this equipment configuration, it is possible for electrical disturbances from the AC mains 2 to pass through the transformer 1 and be transmitted to the subsea equipment.

Referring to Fig. 1b, in which items which correspond with those in Fig. 1a have the same reference numerals as in Fig. 1a, AC mains power is converted to direct current (DC) power by a converter, for example a full wave rectifier, and then, after suitable filtering, a DC/AC inverter is used to provide the high voltage AC power need by the subsea equipment. As shown in Fig. 1b, the AC mains power is transformed to a suitable voltage by the transformer 1 and this is then converted to a DC voltage in an AC/DC converter 6. The DC power output is then fed to a DC/AC inverter 7 which provides the high voltage AC power required by the subsea equipment. The diplexer 4 is included where COP is used but there is no need for the filter 3 required in the conventional approach of Fig. 1a.

This method effectively prevents any disturbances on the AC mains voltage passing through to the subsea equipment by separation, using a DC stage which also similarly blocks the passage of high frequency data back to the AC mains.

Should there be DC power available topside, then there may be no need for an AC/DC converter. Fig. 1c shows an embodiment in that respect, in which items which correspond with those in Fig. 1b have the same reference numerals as in Fig. 1b, the DC for inverter 7 being provided from a topside DC supply 8 connected with it.

### Advantages of the Invention

Isolation is provided between the input mains electrical power and the electrical power transmitted to subsea equipment.

A more noise immune, cleaner subsea voltage is enabled, with potential to reduce the number of subsea equipment failures.

Electrical noise may be reduced to potentially reduce the interference problems with data.

There is no need for communication blocking filters to prevent data entering the mains supply.

An improvement in overall system reliability can be enabled.

## Claims

1. Apparatus for providing electrical power to subsea equipment in a subsea well facility, the apparatus comprising, at a topside location:
first means (6), for providing a direct electrical current;
second means (7), for converting said direct electrical current to an alternating electrical current; and
third means (5), for supplying said alternating electrical current to the subsea equipment, said third means comprising an umbilical, the apparatus further includes, at a topside location, communication means coupled with said third means for superimposing data on the voltage of said alternating current.

2. Apparatus according to claim 1, wherein said first means (6) comprises a source of alternating electrical current and alternating current to direct current conversion means for converting that alternating current to said direct electrical current.

3. Apparatus according to claim 2, including a step-up transformer (1) connected between said source and said conversion means for increasing the voltage of the alternating current from said source received by the conversion means.

4. Apparatus according to claim 1, wherein said first means comprises a topside direct current supply (8).

5. Apparatus according to any preceding claim, wherein said communication means is adapted for extracting data from the subsea equipment received via said supply means.

6. A method of providing electrical power to subsea equipment in a subsea well facility, the method comprising, at a topside location:
providing a direct electrical current;
converting said direct electrical current to an alternating electrical current; and
supplying said alternating electrical current to the subsea equipment, said alternating electrical current being supplied to the subsea equipment via an umbilical (5),
the method further comprises, at the topside location, superimposing data on to the voltage of the alternating current supplied to the subsea equipment.

7. A method according to claim 6, wherein said direct electrical current is provided by converting an alternating electrical current to a direct electrical current.

8. A method according to claim 7, comprising using a step-up transformer (1) to increase the voltage of the alternating current which is converted to a direct electrical current.

9. A method according to claim 6, wherein said direct current is from a topside direct current supply (8).

10. A method according to any of claims 6 to 9, including, at the topside location, extracting data received from the subsea equipment.

## Patentansprüche

1. Vorrichtung zum Bereitstellen von elektrischem Strom an eine Unterwasserausrüstung in einer Unterwasserbohranlage, wobei die Vorrichtung an einer Überwasserstelle Folgendes umfasst:
erste Mittel (6) zum Bereitstellen eines elektrischen Gleichstroms;
zweite Mittel (7) zum Konvertieren des elektrischen Gleichstroms in einen elektrischen Wechselstrom;
und dritte Mittel (5) zum Zuführen des elektrischen Wechselstroms zur Unterwasserausrüstung, wobei die dritten Mittel ein Versorgungskabel umfassen, wobei die Vorrichtung an einer Überwasserstelle ferner umfasst, Kommunikationsmittel, die mit den dritten Mitteln gekoppelt sind, um die Spannung des Wechselstroms mit Daten zu überlagern.

2. Vorrichtung nach Anspruch 1, wobei die ersten Mittel (6) eine Quelle für elektrischen Wechselstrom und Wechselstrom umfassen, um Stromkonversionsmittel zum Konvertieren des Wechselstroms zum elektrischen Gleichstrom zu leiten.

3. Vorrichtung nach Anspruch 2, enthaltend einen Aufwärtstransformator (1), der zum Erhöhen der Spannung des durch die Konversionsmittel empfangenen Wechselstroms von der Quelle zwischen der Quelle und den Konversionsmitteln angeschlossen ist.

4. Vorrichtung nach Anspruch 1, wobei die ersten Mittel eine Überwassergleichstromzufuhr (8) umfassen.

5. Vorrichtung nach einem der vorstehenden Ansprüche, wobei die Kommunikationsmittel zum Extrahieren von über die Zufuhrmittel empfangenen Daten von der Unterwasserausrüstung angepasst sind.

6. Verfahren zum Bereitstellen von elektrischem Strom an eine Unterwasserausrüstung in einer Unterwasserbohranlage, wobei das Verfahren an einer Überwasserstelle Folgendes umfasst:
Bereitstellen eines elektrischen Gleichstroms;
Konvertieren des elektrischen Gleichstroms zu einem elektrischen Wechselstrom; und Zuführen des elektrischen Wechselstroms zur Unterwasserausrüstung, wobei der elektrische Wechselstrom über ein Versorgungskabel (5) der Unterwasserausrüstung zugeführt wird, wobei das Verfahren ferner umfasst, an der Überwasserstelle, Überlagern der Spannung des der Unterwasserausrüstung zugeführten Wechselstroms mit Daten.

7. Verfahren nach Anspruch 6, wobei der elektrische Gleichstrom durch Konvertieren eines elektrischen Wechselstroms in einen elektrischen Gleichstrom bereitgestellt wird.

8. Verfahren nach Anspruch 7, umfassend die Verwendung eines Aufwärtstransformators (1), um die Spannung des elektrischen Wechselstroms zu erhöhen, der in einen elektrischen Gleichstrom konvertiert wird.

9. Verfahren nach Anspruch 6, wobei der Gleichstrom von einer Überwassergleichstromzufuhr (8) ist.

10. Verfahren nach einem der Ansprüche 6 bis 9, enthaltend, an der Überwasserstelle, Extrahieren von von der Unterwasserausrüstung empfangenen Daten.

## Revendications

1. Appareil pour apporter un courant électrique à un équipement sous-marin dans une installation de forage sous-marine, l'appareil comprenant, dans une installation de surface :
un premier dispositif (6) pour la fourniture d'un courant continu ;
un deuxième dispositif (7) pour la conversion dudit courant continu en courant alternatif ; et
un troisième dispositif (5) pour la fourniture dudit courant alternatif à l'équipement sous-marin, ledit troisième dispositif comprenant un câble ombilical, l'appareil comprenant en outre, dans une installation de surface, un dispositif de communication couplé audit troisième dispositif pour la superposition de données sur la tension dudit courant alternatif.

2. Appareil selon la revendication 1, ledit premier dispositif (6) comprenant une source de courant alternatif et un dispositif de conversion de courant alternatif en courant continu pour la conversion dudit courant alternatif dans ledit courant continu.

3. Appareil selon la revendication 2, comprenant un transformateur élévateur (1) connecté entre ladite source et ledit dispositif de conversion pour l'augmentation de la tension du courant alternatif depuis la source reçue par le dispositif de conversion.

4. Appareil selon la revendication 1, ledit premier dispositif comprenant une fourniture de courant continu de l'installation de surface (8).

5. Appareil selon une quelconque des revendications précédentes, ledit dispositif de communication étant adapté pour l'extraction de données de l'équipement sous-marin reçues par le biais dudit dispositif de fourniture.

6. Méthode de fourniture d'une alimentation électrique à un équipement sous-marin dans une installation de forage sous-marine, la méthode comprenant, dans une installation de surface :
la fourniture d'un courant continu ;
la conversion dudit courant continu en courant alternatif ; et
la fourniture dudit courant alternatif à l'équipement sous-marin, ledit courant alternatif étant fourni à l'équipement sous-marin par le biais d'un câble ombilical (5), la méthode comprenant en outre, dans l'installation de surface, la superposition de données sur la tension dudit courant alternatif fourni à l'équipement sous-marin.

7. Méthode selon la revendication 6, ledit courant continu provenant de la conversion d'un courant alternatif en courant continu.

8. Méthode selon la revendication 7, comprenant l'emploi d'un transformateur élévateur (1) pour l'augmentation de la tension du courant alternatif provenant de la conversion d'un courant continu.

9. Méthode selon la revendication 6, ledit courant continu provenant d'une fourniture de courant continu dans l'installation de surface (8).

10. Méthode selon une quelconque des revendications 6 à 9, comprenant, à l'installation de surface, l'extraction de données reçues de l'équipement sous-marin.
